# EUROPÄISCHE PATENTSCHRIFT

(11) **EP 0 433 838 B1**
(45) Veröffentlichungstag und Bekanntmachung des Hinweises auf die Patenterteilung: **02.11.1994**
(21) Anmeldenummer: 90123726.3
(22) Anmeldetag: 10.12.1990
(51) Int. Cl.: C01G 37/027, G11B 5/706

(54) **Verfahren zur Herstellung von stabilisiertem Chromdioxid und magnetischer Aufzeichnungsträger enthaltend dieses Material**
Process for the preparation of stabilized chromium dioxide and magnetic recording medium containing this material
Procédé de préparation du dioxyde de chrome stabilisé et milieu d'enregistrement magnétique contenant ce matériau

(30) Priorität: 16.12.1989 DE 3941578
(43) Veröffentlichungstag der Anmeldung: 26.06.1991
(73) Patentinhaber: BASF Aktiengesellschaft, 67063 Ludwigshafen (DE)
(72) Erfinder: Müller, Michael Wolfgang, Dr., W-6831 Plankstadt (DE); Schwab, Ekkehard, Dr., W-6739 Neustadt (DE); Auweter, Helmut, Dr., W-6703 Limburgerhof (DE); Feser, Rainer, Dr., W-6718 Gruenstadt (DE); Boettcher, Bernhard, Dr., W-6719 Weisenheim (DE); Müller, Norbert, Dr., W-6701 Friedelsheim (DE); Kochanek, Wolfgang, Dr., W-6730 Neustadt (DE)

(56) Entgegenhaltungen:
- EP-A- 0 293 685
- DE-A- 3 240 337
- US-A- 3 512 930
- CHEMICAL ABSTRACTS, vol. 111, no. 22, Columbus, Ohio, US; abstract no. 208081V, G.R. LEE ET AL.: 'REACTIONS OF DIANIONIC CARBONYLMETALATES WITH HETEROALLENES: REDUCTION OF CARBONYL SULFIDE, BY GROUP 6 AND 8 CARBONYLMETALATES'

## Beschreibung

Die Erfindung betrifft ein Verfahren zur Herstellung von stabilisiertem nadelförmigem ferromagnetischem Chromdioxid durch eine reduktive Behandlung des Chromdioxids mit Na₂[Fe(CO)₄] sowie dieses Material enthaltende magnetische Aufzeichnungsträger.

Die Herstellung von nadelförmigem Chromdioxid und die Verwendung dieses Materials für magnetische Aufzeichnungsträger ist vielfach beschrieben. Magnetische Aufzeichnungsträger, die Chromdioxid enthalten, zeigen im allgemeinen gegenüber Aufzeichnungsträgern auf Basis anderer magnetischer Oxide überlegene magnetische Eigenschaften.

Es ist jedoch auch bekannt, daß sich die magnetischen Eigenschaften von nichtstabilisiertem Chromdioxid enthaltenden Aufzeichnungsträgern im Laufe der Zeit verschlechtern. Ferromagnetisches Chromdioxid in Pulverform ist bei Ausschluß von Feuchtigkeit weitgehend stabil, auch ist eine Änderung der magnetischen Eigenschaften über lange Zeit nicht feststellbar. Es wurde aber beobachtet, daß Chromdioxid sowohl von Wasser als auch von anderen Materialien, beispielsweise dem bei der Herstellung von magnetischen Aufzeichnungsträgern verwendeten organischen Polymerbindemitteln, unter Zersetzung zu nichtmagnetischen Bestandteilen angegriffen werden kann. Bei magnetischen Aufzeichnungsträgern bedeutet dies neben einem Verlust bei den magnetischen und somit elektroakustischen Eigenschaften auch eine Beeinträchtigung der mechanischen Werte. Diese Verschlechterung wird bei höheren Temperaturen noch beschleunigt. Es hat daher nicht an Versuchen gefehlt, diese Nachteile zu beseitigen. So beschreibt die US-A 35 12 930 die Behandlung von Chromdioxid-Pulver mit einem Reduktionsmittel. Nach anderen Verfahren werden Aluminiumoxid-überzüge (US-A-35 87 726) oder solche aus schwerlöslichen Metallphosphaten (US-A 36 86 031) erzeugt. Auch das Aufbringen von Metallverbindungen, deren Kationen zur Bildung schwerlöslicher Chromate befähigt sind, ist bereits bekannt (DE-B 21 52 331). Die JA-A-21 200/76 schlägt zur Umhüllung der Chromdioxid-Teilchen das oberflächliche Aufbringen magnetischer Eisenoxide vor, während gemäß der DE-A-27 49 757 und auch der DE-A 3 240 337 Eisen-(III)haltige oxidische Niederschläge auf das Chromdioxid aufgebracht werden. In einer weiteren Ausgestaltung (DE-A 37 18 299) wird ein Chromdioxid, das gemäß US-A 35 12 930 behandelt worden war, mit Hydroxycarbonsäuren beschichtet.

Alle diese Verfahren verbessern die Stabilität des Chromdioxids dadurch, daß entweder auf der Teilchenoberfläche ein Niederschlag abgeschieden wird, der sowohl aus einer Fremdsubstanz als auch aus einem Schwerlöslichen Chromat bestehen kann, oder die Teilchenoberfläche reduktiv behandelt wird, wodurch auch als Oberflächenschicht eine stabile Verbindung des dreiwertigen Chroms entsteht, auf dem dann noch zusätzlich eine organische Verbindung aufgebracht werden kann.

Trotz dieser Bemühungen die Stabilität des Chromdioxids zu gewährleisten und unter Beachtung der angebrachten Vorsichtsmaßnahme bei der Verarbeitung zu magnetischen Aufzeichnungsträgern ist zu beobachten, daß die Stabilität der remanenten Magnetisierung dieser Aufzeichnungsträger nicht unbegrenzt ist. Wie umfangreiche Untersuchungen gezeigt haben, wird die Instabilität des Chromdioxid-Materials in einer Magnetschicht, insbesondere bei höheren Temperaturen, vorwiegend durch die Feuchte der Umgebungsluft hervorgerufen. Durch den Angriff der Luftfeuchtigkeit wird das Chromdioxid in Umkehrung seiner Herstellreaktion in eine Chrom(III)oxid-haltige Verbindung und in Chromationen gespalten, wobei letztere die organischen Komponenten der Magnetschicht oxidativ angreifen. So wird die Stabilität des Chromdioxids in der Magnetschicht bei 0 % relativer Feuchte kaum beeinflußt, erst eine hohe relative Feuchte, von z. B. 95 %, führt selbst bei stabilisiertem Chromdioxid zu einem Rückgang. Dies zeigt, daß eine Stabilisierung des Chromdioxids nach dem Stand der Technik dieses zwar verbessert, unter ungünstigen Bedingungen aber nicht ausreichend ist, um den Einfluß des Wasserdampfes zu verhindern.

Inzwischen ist zwar ein Verfahren vorgeschlagen worden (P 38 28 498.7), das eine hervorragende Stabilisierung des Chromdioxides gewährleistet. Nachteilig hierbei ist allerdings, daß zur Ausbildung der Cr³⁺-Komponente auf der Oberfläche lange Reaktionszeiten erforderlich sind und bedingt durch die dichte Oberflächenschicht aus Cr³⁺ der Oberflächenwiderstand anwächst. Diesen zu erniedrigen ist nur mittels Rußzugabe zur Bandrezeptur möglich, was allerdings die Bandremanenz absenkt.

Es bestand daher die Aufgabe, die bekannten Verfahren so zu verbessern, daß die geschilderten Nachteile nicht auftreten. Es sollte ein Chromdioxid bereitgestellt werden, welches gegen eine Disproportionierung weitgehend geschützt ist, aber, verarbeitet zu magnetischen Aufzeichnungsschichten, gleichzeitig einen niedrigen Oberflächenwiderstand und eine hohe Bandremanenz aufweisen sollte und mit hoher Effizienz hergestellt werden kann.

Es wurde nun gefunden, daß mit einem Verfahren zur Herstellung von stabilisiertem nadelförmigem ferromagnetischem Chromdioxid durch Umsetzen von Oxiden des 3-wertigen und 6-wertigen Chroms bei 200 bis 600°C im Hochdruckreaktor bei 100 bis 700 bar in Gegenwart von Wasser unter Zusatz von mindestens einem Modifizierungsmittel und anschließende reduktive Behandlung der Oberfläche des synthetisierten Chromdioxids in einer wäßrigen Suspension unter Ausbildung einer Verbindung des 3wertigen Chroms auf der Oberfläche, die gestellte Aufgabe gelöst werden kann, wenn als Reduktionsmittel Na₂[Fe(CO)₄] in alkalischer, wäßriger Lösung verwendet wird.

Die Herstellung des nadelförmigen ferromagnetischen Chromdioxids ist bekannt, ebenso wie die reduktive Behandlung des Chromdioxids zum Zwecke der Stabilisierung. So beschreiben beispielsweise die EP-B 27 640 sowie die EP-A 198 110 die Herstellung von Chromdioxidmaterialien, welche unter Zuhilfenahme von speziellen Modifizierungsmitteln auf der Basis von Antimon, Selen, Tellur und/oder Eisen oder deren Verbindungen besonders vorteilhafte magnetische Eigenschaften und enge Teilchengrößenverteilungen aufweisen. Bei der Herstellung kann es gegebenenfalls vorteilhaft sein, das Chromdioxid vor der reduktiven Behandlung einer Temperaturbehandlung zu unterwerfen. Dies kann beispielsweise dadurch geschehen, daß das bei der Synthese erhaltene Chromdioxid nach einer Zerkleinerung auf eine Agglomeratgröße von 0,1 bis 1 mm bei 150 bis 450°C, im allgemeinen bei 300 bis 380°C an Luft getempert wird.

Zur Durchführung des erfindungsgemäßen Verfahrens wird das zwischen 150 bis 450°C getemperte Chromdioxid in Wasser durch kräftiges Rühren suspendiert. Dabei ist es zweckmäßig, ein Verhältnis von 1 Teil Pulver auf mindestens 10 Teile Wasser einzuhalten. Diese Suspension wird dann mit NaOH auf einen pH-Wert zwischen 7 und 14 und insbesondere zwischen 9 und 12 eingestellt, wobei die Temperatur zwischen 10 und 100°C und bevorzugt 20 bis 30°C betragen sollte und anschließend innerhalb von 5 bis 60 Minuten mit 20 bis 60 g pro 100 g CrO2 einer Na₂[Fe(CO)₄]-Lösung versetzt. Diese Lösung wird durch Einleiten von Fe(CO)₅ in Natronlauge erhalten. Die Mischung wird 0 bis 240 Minuten, üblicherweise 10 bis 20 Minuten nachgerührt, filtriert und der feuchte Filterkuchen bei Raumtemperatur unter 100°C, üblicherweise bei 50 bis 70°C, getrocknet.

Das nach dem erfindungsgemäßen Verfahren erhaltene Chromdioxid zeichnet sich durch einen äußerst geringen Gehalt an eluierbaren Chrom(VI)ionen unter Beibehaltung der hervorragenden magnetischen Eigenschaften des Materials sowie niedrigem Oberflächenwiderstand aus. Diese Verbesserung der Eigenschaften des Chromdioxidmaterials wirkt sich insbesondere dann aus, wenn es zur Herstellung von magnetischen Aufzeichnungsträgern eingesetzt wird und in die organische Polymere enthaltende Magnetschicht eingebettet ist.

Die Verarbeitung des erfindungsgemäß hergestellten Chromdioxids zu magnetischen Aufzeichnungsträgern erfolgt nach bekannten Methoden. Für die Herstellung der Magnetschicht werden 2 bis 5 Gew.-Teile Chromdioxid mit einem Teil des Bindemittels bzw. -gemisches sowie den geeigneten Dispergierhilfsmitteln, Gleitmitteln und weiteren üblichen Zusatzstoffen in einer Gesamtmenge bis zu 10 Gew.-% des Chromdioxids zu einer Dispersion verarbeitet. Die so erhaltene Dispersion wird filtriert und mit einer üblichen Beschichtungsmaschine, z. B. mittels eines Linealgießers, auf den unmagnetischen Träger in einer oder mehreren dünnen Schichten aufgetragen. Vor Trocknung der flüssigen Beschichtungsmischung bei Temperaturen zwischen 50 und 90°C wird gegebenenfalls eine magnetische Ausrichtung der Chromdioxidteilchen vorgenommen. Für eine spezielle Oberflächenvergütung der Magnetschicht werden die beschichteten Folienbahnen zwischen geheizten polierten Walzen unter Druck hindurchgeführt. Danach betragen die Dicken der Magnetschichten üblicherweise zwischen 1,5 und 12 µm.

Als Bindemittel für die Magnetschichten können die bekannten Polymerbindemittel verwendet werden, wie Acrylat-Copolymere, Polyvinylacetate, wie Polyvinylformal oder Polyvinylbutyral, höhermolekulare Epoxidharze, Polyurethane und Gemische dieser und ähnlicher Bindemittel. Als vorteilhaft haben sich die in einem flüchtigen organischen Lösungsmittel löslichen Elastomeren und praktisch isocyanatgruppenfreien linearen Polyesterurethane erwiesen, wie sich durch Umsetzung eines Polyesters aus einer aliphatischen Dicarbonsäure mit 4 bis 6 C-Atomen, wie Adipinsäure, und mindestens einem aliphatischen Diol mit 3 bis 10 C-Atomen, wie 1,2- und 1,3-Propylenglykol, 1,4-Butandiol, Diethylenglykol, Neopentylglykol oder 1,8-Octandiol, mit einem Diisocyanat mit 6 bis 24 und insbesondere 8 bis 20 C-Atomen, wie Toluylendiisocyanat oder 4,4'-Diisocyanatodiphenylmethan, bevorzugt in Gegenwart einer kleineren Menge eines Glykols mit 4 bis 10 C-Atomen, wie 1,4-Butandiol, das eine Kettenverlängerung bewirkt, hergestellt werden können. Bevorzugt sind solche Polyesterurethane aus Adipinsäure. 1,4-Butandiol und 4,4'-Diisocyanatodiphenylmethan. Bevorzugte Polyesterurethane haben eine Shore-Härte A von 70 bis 100, eine Reißfestigkeit von 40 bis 42 N/mm² (nach DIN 53 455) und eine Reißdehnung (nach DIN 53 455) von etwa 440 bis 560 %. Der K-Wert nach H. Fikentscher (Cellulose-Chemie 13 (1932), Seite 58 ff) liegt für die besonders geeigneten Polymerbindemittel zwischen 40 und 60.

Magnetische Aufzeichnungsträger, welche unter Verwendung des erfindungsgemäß hergestellten Chromdioxides gefertigt werden, zeichnen sich neben den bekannt guten elektroakustischen Kenndaten durch eine sehr gute Klimastabilität sowie niedrigem Oberflächenwiderstand, hohe Bandremanenz und durch gute mechanische Eigenschaften, insbesondere der Haftfestigkeit, aus. Sie weisen insbesondere eine remanente Magnetisierung der magnetisierbaren rußfreien Schicht von mindestens 140 mT, welche im Klimatest um weniger als 3 % abnimmt, sowie einen Oberflächenwiderstand von weniger als 400 MΩ auf.

Die Erfindung sei anhand der folgenden Beispiele gegenüber einem Vergleichsversuch nach dem Stand der Technik näher erläutert. Die in den nachstehenden Beispielen und den Vergleichsversuchen genannten Teile und Prozente beziehen sich, soweit nicht anders angegeben, auf Gewicht.

### Beispiel 1

In einem Reaktionsgefäß mit einem Volumen von 300 ml wurden 47,5 g Wasser vorgelegt. Dann wurden unter Rühren zunächst 121,7 g Chromsäureanhydrid (CrO₃) zugegeben. Nach 10 Minuten wurden dazu 0,57 g Kaliumantimonyltartrat (KSbO(C₄H₄O₆) · 5 H₂O, Molgewicht 333,93), d. h. 0,148 Gew.-%, Sb₂O₃ bezogen auf Chromdioxid und 0,51 g nadelförmiges gamma-Fe₂O₃, d. h. 0,3 Gew.-% Fe₂O₃, bezogen auf Chromdioxid, zugegeben. War die durch Zugabe des antimonhaltigen Modifizierungsmittels einsetzende Gasentwicklung abgeklungen, wurden unter ständigem Rühren 60 g Chrom(III)oxid eingetragen und weitere 20 Minuten gerührt. Danach wurde die Reaktionsmaische in einem Autoklaven auf Temperaturen zwischen 300 und 350°C erhitzt. Dabei bildete sich Chromdioxid. Durch den entstehenden Sauerstoff baut sich ein Druck auf, der mittels Regelventil bei 300 bis 400 bar gehalten wurde. Nach Reaktionsende wurde der Reaktor so entspannt und abgekühlt, daß das Chromdioxid mit einer Restfeuchte von 1 bis 5 % anfällt. Es wurde mechanisch aus dem Reaktorgefäß ausgeräumt, gemahlen und bei 380°C an Luft 60 Minuten lang getempert. Dann wurden 100 g des Produkts in 1 l H₂O suspendiert und mit 25%iger NaOH-Lösung auf pH-Wert 9 eingestellt. Es wurden dann 38,9 g einer Na₂[Fe(CO)₄] Lösung bei 22°C innerhalb von 5 min zugetropft.

Diese Lösung bestand aus 20 Gew.-% Fe(CO)₅, 21,6 Gew.-% NaOH und der Restmenge an Wasser.

Es wurde sofort filtriert, gewaschen und bei 50°C im Vakuum getrocknet.

An dem resultierenden Chromdioxid wurden die spezifische Oberfläche nach BET in [m²/g] gemäß DIN 66 136 mittels eines Ströhlein-Areameter der Firma Ströhlein, Düsseldorf, nach dem Einpunkt-Differenzverfahren nach Haul und Dümpgen sowie die magnetischen Eigenschaften mittels eines Schwingmagnetometers in einem Meßfeld von 400 kA/m bei einer mittleren Probendichte p[g/cm³] bestimmt, und zwar die Koerzitivfeldstärke Hc in (kA/m) sowie die spezifische Remanenz Mr/ρ in [nTm³/g]. Außerdem wurde auch der Gehalt an Chrom(VI)-ionen bestimmt, und zwar photometrisch mit Diphenylcarpazid (DIN 53 780) in einem wäßrigen Extrakt, der nach folgender Vorschrift hergestellt wurde: In ein 150 ml Becherglas (niedere Form) wurden mit der Analysenwaage 1,000 g CrO₂ eingewogen und 100 ml dest. H₂O zugegeben. Ein Magnetrührgerät wurde mit der Einstellung 320°C vorgeheizt bis der Temperaturregler schaltet. Die Probe wurde nun 10 Minuten auf den Magnetrührer 50 h/min) gestellt und 5 Minuten gekocht. Nach 10 Minuten abkühlen wurde die Probe über zwei Faltenfilter in einen 500 ml Meßkolben filtriert, mit kaltem dest. Wasser gewaschen und der Messkolben bis zur Eichmarke aufgefüllt. Die Eisenbestimmung erfolgt mittels Atomabsorptionsspektroskopie.

Die Meßergebnisse sind in Tabelle 1 angegeben.

### Beispiel 2

Es wurde ein Pigment gemäß Beispiel 1 hergestellt, jedoch wurden nur 20 g Na₂[Fe(CO)₄]-Lösung derselben Konzentration eingesetzt. Die Meßergebnisse siehe Tabelle 1.

### Vergleichsversuch 1

Ein unter den gleichen Bedingungen und mit den selben Dotierstoffmengen wie in Beispiel 1 beschrieben, hydrothermal hergestelltes CrO₂ wird nach dem Temperschritt bei 380°C 60 min lang mit 10 Gewichtsteilen Wasser je Gewichtsteil CrO₂ suspendiert und mit 0,2 Gewichtsteilen Natriumsulfit je Gewichtsteil CrO₂, in Wasser gelöst, versetzt. Anschließend wurde die auf 85°C aufgeheizte Suspension 45 Minuten lang gerührt, dann mit Wasser gewaschen und in Vakuum bei 50°C getrocknet.

Die Meßergebnisse sind in der Tabelle 1 angegeben.

### Vergleichsversuch 2

Ein gemäß Vergleichsversuch 1 hergestelltes Chromdioxid wurde im Verhältnis 12 Teile Wasser und 1 Teil Chromdioxid aufgeschlämmt; Diese Suspension wurde dann mit einer 30 %igen FeCl₂-Lösung (3,4 % Fe bezogen auf CrO₂) versetzt, unter Stickstoffabdeckung auf 45°C erhitzt und anschließend mit 15 %iger Natronlauge auf einen pH-Wert von 10 eingestellt. Daraufhin wird die gesamte Mischung 5 Stunden lang intensiv gerührt, mit Luft bei konstantem pH-Wert begast und der resultierende Feststoff abgesaugt, gewaschen und getrocknet.

Die Meßergebnisse sind in der Tabelle 1 angegeben.

**Tabelle 1**

| | Hc [kA/m] | Mm/ρ [nTm³/g] | Mr/ρ [nTm³/g] | CrO₃ mg CrO₃/g CrO₂ | Fe-Gehalt Gew.-% |
|---|---|---|---|---|---|
| Beispiel 1 | 44 | 85 | 41 | 0,93 | 1,4 |
| Beispiel 2 | 43 | 89 | 42 | 2,4 | 1,3 |
| Vergleichsversuch 1 | 39 | 85 | 41 | 0,8 | 0,41 |
| Vergleichsversuch 2 | 41 | 79 | 39 | 0,7 | 3,3 |

Mit den in Tabelle 1 beschriebenen Pulvern wurden anhand der folgenden Vorschrift magnetische Aufzeichnungsschichten hergestellt.

### Beispiele B1, B2, BV1 und BV2

In einer 500 Volumenteile fassenden und mit 100 Volumenteilen Stahlkugeln mit einem Durchmesser von 1,5 mm gefüllten Mühle wurden jeweils 40 Teile der in Tabelle 1 angegebenen Chromdioxidproben mit 175 Teilen einer 13 %igen Lösung eines thermoplastischen Polyesterurethans aus Adipinsäure, 1,4-Butandiol, 4,4'-Diisocyanatodiphenylmethan in einem Gemisch aus gleichen Teilen Tetrahydrofuran und Dioxan, 150 Teile einer 13 %igen Lösung eines handelsüblichen Polyvinylformals in einer Mischung aus gleichen Teilen Tetrahydrofuran und Dioxan, 24 Teile eines Lösungsmittelgemisches aus gleichen Teilen Tetrahydrofuran und Dioxan und 1 Teil Zinkstearat gemischt und 4 Stunden dispergiert. Danach wurden noch einmal die gleichen Mengen der beiden Bindemittellösungen, 13,5 Teile des genannten Lösungsmittelgemisches sowie 0,1 Teile eines handelsüblichen Silikonöls zugefügt und weitere 30 Minuten dispergiert. Anschließend wurde die Dispersion filtriert und auf einer üblichen Beschichtungsmaschine mittels eines Linealgießers auf eine Polyethylenterephthalatfolie aufgebracht, so daß sich nach dem Trocknen und Kalandrieren eine Trockenschichtdicke von 5,5 µm ergab. Unmittelbar nach dem Aufgießen der flüssigen Dispersion wurden die nadelförmigen Chromdioxidteilchen durch ein Magnetfeld längs der Aufzeichnungsrichtung orientiert.

Die Oberfläche der Magnetschicht hatte eine mittlere Rauhigkeit Rz, gemessen nach DIN 4756, Blatt 1 von 0,15 µm. Die beschichtete Folie wurde in 3,81 mm breite Magnetbänder geschnitten.

Die Magnetbänder wurden wie folgt geprüft:
1. Magnetische Eigenschaften
   Die Bestimmung der magnetischen Eigenschaften der resultierenden Magnetbänder erfolgte mittels eines Schwingmagnetometers bei einem Meßfeld von 160 kA/m. Dabei wurde die Koerzitivfeldstärke Hc in [kA/m] und die remanente Magnetisierung Mr in [mT] gemessen sowie der Ausrichtfaktor Rf als der Quotient aus der Remanenz längs der magnetischen Vorzugsrichtung zu derjenigen in Querrichtung errechnet.
2. Elektroakustische Eigenschaften
   2.1 Klimastabilität
      An dem magnetischen Aufzeichnungsträger wurde die Klimastabilität bei 50°C und 70 % relativer Feuchte bestimmt, und zwar wurden hierzu unter diesen Bedingungen ein magnetischer Aufzeichnungsträger im Klimaschrank zwei Wochen gelagert und jeweils die remanente Magnetisierung bei Raumtemperatur gemessen und in Prozent vom Anfangswert angegeben. Die Bestimmung der magnetischen Eigenschaften erfolgte mittels eines Schwingungsmagnetometers bei einem Meßfeld von 160 kA/m.
3. Oberflächenwiderstand
   Der Oberflächenwiderstand (OF) wurde indirekt über das Ausmessen der elektrischen Leitfähigkeit des Magnetbandes bestimmt. Die Messung erfolgt mit einem digitalen Milli/Tera-Ohmmeter (Camphausen, Berlin) für den Widerstandsanzeigebereich 10⁻⁴ bis 2 · 10¹⁴ Ohm.

Als Meßelektrode für die Bandmessung dient eine Auflage mit Metallzungen (DIN 53 482) im Abstand der gemessenen Bandbreite, so daß die Meßwerte des Schichtwiderstandes verschiedener Bandbreiten durch die Quadratform der Meßfläche direkt vergleichbar werden.

| Meßbedingungen: | |
|---|---|
| Prüfklima: | 23°C, 50 % RF |
| Meßspannung: | 10 Volt |

| | B1 | B2 | BV1 | BV2 |
|---|---|---|---|---|
| Hc [kA/m] | 43 | 42 | 39 | 40 |
| Mr [mT] | 149 | 151 | 154 | 143 |
| Stabilität [%] | 98,3 | 97,8 | 98,3 | 98,5 |
| OF [MΩ] | 150 | 52 | 2000 | 5400 |

## Patentansprüche

1. Verfahren zur Herstellung von stabilisiertem nadelförmigem Chromdioxid durch Umsetzen von Oxiden des 3-wertigen und 6-wertigen Chroms bei 200 bis 600°C im Hochdruckreaktor bei 100 bis 700 bar in Gegenwart von Wasser unter Zusatz von mindestens einem Modifizierungsmittel und anschließende reduktive Behandlung der Oberfläche des synthetisierten Chromdioxids in einer wäßrigen Suspension unter Ausbildung einer Verbindung des 3-wertigen Chroms auf der Oberfläche, dadurch gekennzeichnet, daß als Reduktionsmittel Na₂[Fe(CO)₄] in alkalischer, wäßriger Lösung eingesetzt wird.

2. Verfahren gemäß Anspruch 1, dadurch gekennzeichnet, daß das nach der Synthese erhaltene Chromdioxid vor der reduktiven Behandlung bei einer Temperatur zwischen 150 und 450°C getempert wird.

3. Magnetische Aufzeichnungsträger, erhältlich nach dem Verfahren von Anspruch 1 oder 2.

## Claims

1. A process for the preparation of stabilized acicular chromium dioxide by reacting oxides of trivalent and hexavalent chromium at from 200 to 600°C in a high pressure reactor at from 100 to 700 bar in the presence of water with the addition of one or more modifiers and subsequent reductive treatment of the surface of the synthesized chromium dioxide in an aqueous suspension with formation of a compound of trivalent chromium on the surface, wherein Na₂[Fe(CO)₄] in alkaline, aqueous solution is used as the reducing agent.

2. A process as claimed in claim 1, wherein the chromium dioxide obtained after the synthesis is heated at from 150 to 450°C prior to the reductive treatment.

3. A magnetic recording medium, obtainable by the process of claim 1 or 2.

## Revendications

1. Procédé de préparation de bioxyde de chrome aciculaire, stabilisé, par réaction d'oxydes du chrome trivalent et hexavalent, à 200 à 600°C, dans un réacteur haute pression, de 100 à 700 bar, en présence d'eau, sous addition d'au moins un agent de modification, et traitement réducteur suivant de la surface de bioxyde de chrome synthétisé, dans une suspension aqueuse, avec formation d'un composé du chrome trivalent sur la surface, caractérisé par le fait que l'on utilise, comme agent de réduction, Na₂[Fe(CO)₄] en solution aqueuse alcaline.

2. Procédé selon la revendication 1, caractérisé par le fait que le bioxyde de chrome obtenu après la synthèse est réchauffé, avant le traitement réducteur, à une température comprise entre 150 et 450°C.

3. Support d'enregistrement magnétique, obtenu selon le procédé de la revendication 1 ou 2.
